Europäisches Patentamt

European Patent Office

Office européen des brevets

(19)

(11) Veröffentlichungsnummer: **0 236 373**
**B1**

(12) **EUROPÄISCHE PATENTSCHRIFT**

(45) Veröffentlichungstag der Patentschrifft:
07.02.90

(21) Anmeldenummer: **86905203.5**

(22) Anmeldetag: **30.08.86**

(86) Internationale Anmeldenummer:
**PCT/DE 86/00346**

(87) Internationale Veröffentlichungsnummer:
**WO 87/01577 (26.03.87 Gazette 87/07)**

(51) Int. Cl. ⁵: **A 61 C 7/00**

(54) VERFAHREN ZUR ENTFERNUNG VON AUF ZAHNSCHMELZ AUFGEKLEBTEN OBJEKTEN, INSBESONDERE BRACKETS.

(30) Priorität: **13.09.85 DE 3532656**

(43) Veröffentlichungstag der Anmeldung:
**16.09.87 Patentblatt 87/38**

(45) Bekanntmachung des Hinweises auf die Patenterteilung:
**07.02.90 Patentblatt 90/06**

㊻ Bennante Vertragsstaaten:
**AT BE CH DE FR GB IT LI NL SE**

(56) Entgegenhaltungen:
**CH-A-183 006**
**DE-A-3 327 882**
**FR-A-2 177 047**
**US-A-4 375 961**
**US-A-4 455 138**

(73) Patentinhaber: **SCHEU-DENTAL**
**Am Burgberg 20**
**D-5860 Iserlohn7 (DE)**

(72) Erfinder: **HOHMANN, Wolfgang**
**Tambacher Strasse 18a**
**D-1000 Berlin 46 (DE)**
Erfinder: **SCHOPF, Peter-Michael**
**Römerbrunnen 45**
**D-6368 Bad Vilbel 3 (DE)**
Erfinder: **GERKHARDT, Klaus**
**Wilhelm-Leuschner-Strasse 17**
**D-6520 Worms (DE)**
Erfinder: **KOCJANCIC, Bogdan**
**Kelsterbacher Strasse 52**
**D-6000 Frankfurt 71 (DE)**

(74) Vertreter: **Patentanwälte Meinke und Dabringhaus Dipl.-Ing. J. Meinke Dipl.-Ing. W. Dabringhaus**
**Westenhellweg 67**
**D-4600 Dortmund 1 (DE)**

EP 0 236 373 B1

LIBERGRAF, STOCKHOLM 1990

**Beschreibung**

Die Erfindung richtet sich auf ein Verfahren zur Entfernung von auf dem Zahnschmelz aufgeklebten, einer orthodontischen Behandlung dienenden Brackets oder anderer metallischer Dentalobjekte, wobei die Klebeschicht zwischen dem Bracket bzw. dem Objekt und dem Zahnschmelz durch Erwärmung in ihrer Haftfähigkeit reduziert wird.

Es ist bekannt, bei zahnregulierenden Maßnahmen, auf die Zahnaußenfläche Brackets zu kleben, die dann über entsprechende Spanndrähte einer dauernden Belastung in einer vorbestimmten Richtung unterworfen werden, um auf diese Art und Weise nach und nach den Zahn in die gewünschte Position zu bringen. Da auf die Brackets eine vergleichsweise hohe Belastung einwirkt, muß die Verbindung zur Zahnoberfläche möglichst fest sein. Eine Möglichkeit besteht darin, die Brackets mittels Metallschlingen mechanisch am Zahn zu befestigen. Eine andere Möglichkeit besteht darin, und nur um diese geht es bei der vorliegenden Erfindung, die Brackets aufzukleben.

Um die Haftung des Klebers am Zahn zu erhöhen, wird die Zahnoberfläche angeätzt, um eine schwammartige Vergrößerung dieser Oberfläche zu erreichen.

Ist die dauerhafte Verbindung der Brackets mit den zu behandelnden Zähnen bei der orthodontischen Behandlung besonders wünschenswert, so stellt sie ein Problem für die Entfernung der Brackets nach Beendigung der Behandlung dar. Bisher ist es üblich, eine mechanische Entfernung der Brackets vorzunehmen, wobei Beschädigungen des Zahnes in Kauf genommen werden. Bei dieser Entfernungsart wird das Bracket z. B. mit einer Zange ergriffen und gewaltsam vom Zahn abgeschert, abgedreht oder abgehebelt, wobei die Klebeschicht zerreißen soll. Hierbei besteht die Gefahr, daß Zahnschmelz mit abgerissen wird.

Aus der US-PS-4 455 138 ist ein Werkzeug bekannt, das mit einer beheizbaren Klinge in Ausnehmungen an den Brackets eingreifen kann. Der Benutzer hält dabei das Werkzeug solange an das Bracket, bis die heiße Klinge letzteres so weit erwärmt hat, daß die Wärme die Haftfähigkeit des Klebers reduziert hat. Mit dem klingenförmigen Werkzeug kann dann das Bracket abgeschert werden.

Ein besonderer Nachteil dieses bekannten Werkzeuges besteht darin, daß z. B. bei unvorhergesehener Kopfbewegung des Patienten oder bei anderen Einflüssen das heiße Werkzeug den Patienten berühren kann, so daß es dann zu örtlichen Verbrennungen kommen kann. Auch kann es zur Überhitzung des Zahnes selbst kommen mit den weiter unten noch zu beschreibenden Nachteilen.

Demgegenüber ist es Aufgabe der Erfindung, eine Beeinflussung der Klebeschicht zu erreichen, bei dem der Zahn des Patienten nachhaltig geschützt ist, derart, daß es zu einer Aufheizung des Zahnes selbst gar nicht kommen kann.

Bei einem Verfahren der eingangs bezeichneten Art wird diese Aufgabe gemäß der Erfindung dadurch gelöst, daß das Bracket oder Dentalobjekt selbst als elektrischer Widerstand benutzt wird, dessen Erwärmung durch eine direkte elektrische Widerstandserwärmung vorgenommen wird. Durch die Widerstandserwärmung des Werkzeuges wird erreicht, daß das Werkzeug zunächst völlig kalt ist, bei Handhabungsfehlern kann es daher nicht zu Verbrennungen bei dem Patienten kommen. Auch eignet sich die Widerstandserwärmung der metallischen Objekte besonders dazu, daß die Behandlung sehr kurz erfolgen kann, da durch eine Widerstandserwärmung die metallischen Objekte sehr schnell erhitzt werden und es damit sehr rasch zum Ablösen der Kleberbeschichtung kommen kann.

Die Erfindung macht sich die Zusammensetzung der zum Einsatz kommenden Klebstoffe zu Nutze, die im Regelfalle kunststoffgebundene Composite darstellen, die durch Wärme in ihrer Haftfähigkeit stark beeinflußbar sind. Durch die Erwärmung dieser in der Praxis sehr dünnen Kleberschicht wird die Haftfähigkeit stark vermindert und das aufgeklebte Bracket kann leicht abgehoben werden. Dies kann dabei so geschehen, daß das einzelne Bracket unbeschädigt bleibt, was beim bisherigen Abreißen oder Abscheren nicht gewährleistet ist, so daß die Brackets einer heute gewünschten Wiederverwendung zugeführt werden können.

In Ausgestaltung sieht die Erfindung vor, daß die Erwärmung als Kurzzeiterwärmung durchgeführt wird, wie dies bereits oben angesprochen wurde.

Die Aufbringung der notwendigen Energie kann in sehr unterschiedlicher Weise vorgenommen werden. So sieht die Erfindung in einer Ausgestaltung vor, daß die elektrische Widerstandserwärmung durch eine Folge hochfrequenter Wechselstromimpulse vorgenommen wird, wobei die Erfindung ebenfalls vorsehen kann, daß die Widerstandserwärmung über eine Gleichstromquelle vorgenommen wird.

Zweckmäßig ist das Verfahren so ausgestaltet, daß die Widerstandserwärmung durch ein pinzetten- oder zangenähnliches Greifwerkzeug aufgebracht wird. Werden nämlich die Dentalobjekte, die auf den Zähnen aufgeklebt sind, überhitzt, so kommen bei den einzusetzenden Klebstoffen Temperaturen bis zu 200°C in Frage, auf die das metallische Objekt sehr kurzfristig erhitzt wird. Daher ist es sinnvoll, dieses auch direkt zu ergreifen, damit es sich im heißen Zustand zwar vom Zahn löst, nachträglich allerdings nicht in den Mundraum fällt und dort Verbrennungen verursacht.

In Ausgestaltung sieht die Erfindung vor, daß das Greifwerkzeug mit einer Gleichstromquelle verbindbar ist, wobei von der Gleichstromquelle eine niedrige Spannung mit einer hohen Stromstärke für einen vergleichsweise kurzen Zeitraum aufgebracht wird, wobei hier insbesondere vorgesehen ist, daß die Gleich- oder auch Wechsel-spannung von 2 Volt und eine Stromstärke von bis zu 1 Kilo-Ampère in einem Zeitraum von einigen Millisekunden zum Einsatz kommt.

Spannung, Stromart und Stromstärke können von den hier angegebenen Bereichen selbstverständlich abweichen, diese liegen insbesondere in der Art der zum Einsatz kommenden Metalle der Dentalobjekte und dgl. mehr.

Ein wesentlicher Faktor bei der Ablösung der Brackets unter Wärmeentwicklung ist darin zu sehen, daß ein Zahn in seinem Inneren nicht höher als 56°C erhitzt werden darf, um biologische Schädigungen zu vermeiden, d.h. um der Gefahr entgegenzutreten, daß das Körpereiweiß nicht zu koagulieren beginnt. Um diese Gefährdung mit Sicherheit auszuschließen, sollte eine max. Innentemperatur des Zahnes von 45°C nicht überschritten werden. Das Erreichen dieser Temperatur hängt selbstverständlich von der Erhitzungstemperatur der Brackets und der Dauer ab, d.h. wie lange diese Wärme auf den Zahn einwirken kann. Bei einer indirekten Erwärmung mit beispielsweise einem erhitzten Werkzeug sollten Temperaturen von 150°C nicht überschritten werden, die Einwirkungsdauer sollte etwa 8 sec. nicht überschreiten.

Bei der direkten Erwärmung können diese Verhältnisse geringfügig anders liegen. Dabei kann das Bracket eine Spitzentemperatur von 200°C erreichen, da dies nur für Bruchteile von Sekunden der Fall ist, besteht das Risiko nicht, den Zahn über die gewünschte Innentemperatur von 45°C hinaus zu erhitzen.

Zur Durchführung des Verfahrens ist eine Vorrichtung zur Erwärmung metallischer Dentalobjekte mit zur Erwärmung der Objekte dienenden Elementen geeignet, die als zwei elektrisch gegeneinander isolierte pinzettenarmige Greifschenkel eines pinzetten- bzw. zangenähnlichen Greifwerkzeugs ausgebildet sind, wobei die Greifschenkel mit einer Stromquelle verbindbar sind. Eine solche Vorrichtung ist beispielsweise aus der CH-A-183 006 zum Verschweißen von Dentalobjekten bekannt.

Besonders geeignet ist eine Vorrichtung die sich dadurch auszeichnet, daß zum Entfernen von auf dem Zahnschmelz aufgeklebten, einer orthodontischen Behandlung dienenden Brackets oder anderer metallischer Dentalobjekte diese mit einer Schutzschaltung derart versehen ist, daß der Hochstromimpuls erst dann ausgelöst werden kann, wenn der elektrische Kontakt zwischen abzulösendem Objekt und den Greifschenkeln des Greifwerkzeuges vorhanden ist.

Dieses zangenartige oder pinzettenartige Instrument hat den Vorteil, daß es zum einen das Bracket halten kann und zum anderen über dieses Instrument direkt die notwendige Energie zugeführt werden kann, um die Klebstoffschicht zu erwärmen. Durch die Schutzschaltung ist gewährleistet, daß es nicht zu Fehlbetätigungen kommen kann, z. B. daß sich durch ein Berühren der Zangenarme diese schon vor Ergreifen des Brackets so stark erhitzen, daß es ggf. zur Verletzungen beim Patienten führen kann.

Andere zweckmäßige Gestaltungen bestehen darin, daß die Pinzettenschenkel mit wenigstens teilweise auswechselbaren, den jeweiligen Objekten angepaßten Greifenden ausgerüstet sind, oder daß die Vorrichtung mit einer optischen und/oder akustischen Kontaktanzeige ausgerüstet ist.

Auch kann die Vorrichtung mit einem Zeitrelais verbunden sein, wenn dies je nach Gestaltung notwendig sein sollte.

Dieses Zeitrelais hat die besondere Aufgabe, eine mehrfache hintereinander abfolgende Energieeinleitung in die Brackets in zu kurzen Abständen zu verhindern. Geschieht nämlich eine zu häufige Beaufschlagung der Brackets über die erfindungsgemäße Vorrichtung in zu kurzen Abständen, so besteht die Gefahr, daß sich diese so erheblich erhitzen, daß der Zahn davon Schaden nehmen kann, es kann ohne weiteres zum Glühen der Brackets kommen. Das Zeitrelais verhindert dies durch eine Sperre, die das Gerät so lange funktionsuntüchtig hält bis eine Abkühlung der Brackets mit Sicherheit gewährleistet ist.

Die Erfindung ist nachstehend anhand der Zeichnung beispielsweise näher erläutert. Diese zeigt in

Fig. 1   die vereinfacht wiedergegebene Gestaltung der Gleichstromquelle,

Fig. 2   ein auf einen Zahn aufgeklebtes Bracket und in

Fig. 3   in räumlicher Darstellung einmal dieses Ausführungsbeispiel eines Greifwerkzeuges.

Eine Vorrichtung zur Durchführung des Verfahrens zur Ablösung eines von auf der Oberfläche 1 eines Zahnes 2 über eine Klebstoffschicht 3 aufgeklebten Brackets 4 besteht im wesentlichen aus einer allgemein mit 5 bezeichneten Gleichstromquelle und einem allgemein mit 6 bezeichneten Greifinstrument.

Das Greifinstrument 6 weist zwei über eine Isolierung 7 miteinander verbundene Greifschenkel 8 auf. Diese Greifschenkel 8 sind mit Steckerbuchsen 9 ausgerüstet, in die Stecker 10 eines Verbindungskabels einsteckbar sind, mit welchem das Greifinstrument 6 mit der Gleichstromquelle 5 verbunden werden kann.

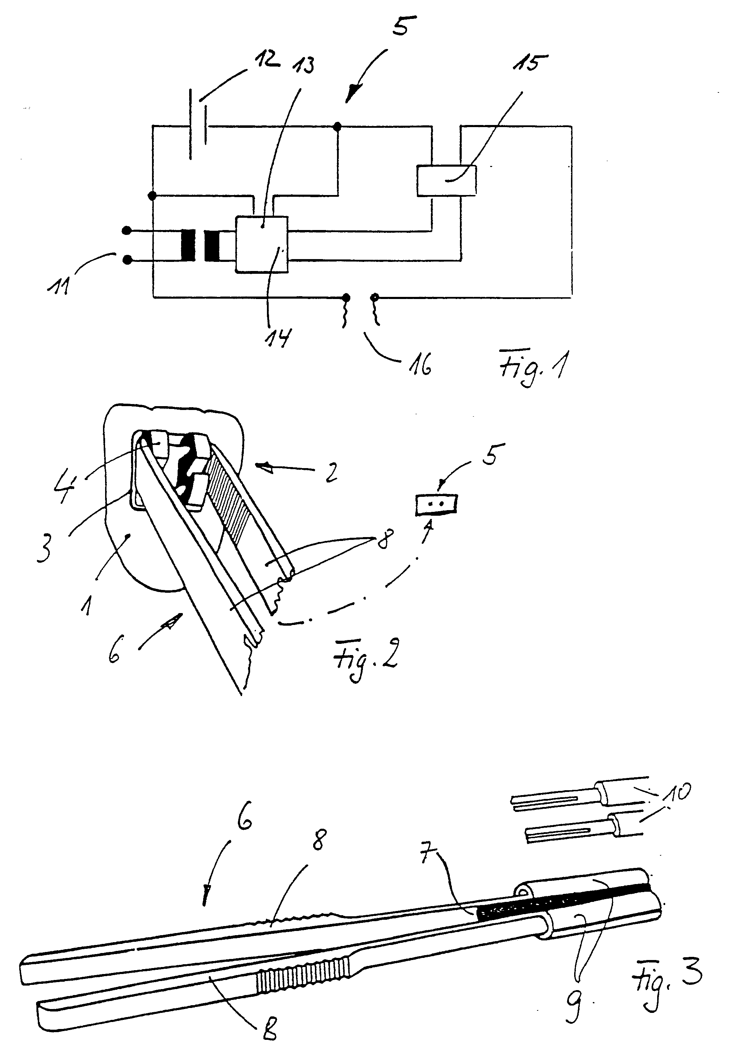

Die in Fig. 1 wiedergegebene Gleichstromquelle 5 ist im wesentlichen in Art eines Batterieladegerätes ausgebildet und zu diesem Zweck mit einem lösbaren Netzanschluß 11 für z. B. 220 Volt bei 50 Hz ausgerüstet. Die zu ladende Batterie ist mit 12 bezeichnet. Der Ausgang des Batterieladegerätes mit 13. In dem Batterieladegerät ist ein Zeitrelais 14 vorgesehen, wobei das Gesamtgerät noch über einen Leistungsschalter 15 betätigbar ist. Die mit den Leistungssteckern 10 verbundenen Kabelenden sind in Fig. 1 mit 16 bezeichnet.

Die wesentlichen Funktionen der in Fig. 1 vereinfacht wiedergegebenen Schaltung bestehen darin, das Instrument 6 über kurze Zeiten mit einer vergleichsweise geringen Spannung von etwa 2 Volt bei einer vergleichsweise hohen Stromstärke von 100 Ampère und mehr zu versorgen, und zwar in einem sehr kurzen Zeitraum von einigen Millisekunden.

Z. B. schaltet der Benutzer bei Anlage der Schenkel 8 an das Bracket 4 die Gleichstromquelle 5 über den Leistungsschalter 15, z. B. durch Betätigung eines nicht näher dargestellten Fußschalters, an. Die Gleichstromquelle 5 liefert dann innerhalb einiger Millisekunden eine Spannung von 2 Volt bei einer Stromstärke von 100 Ampère und darüber zwischen den Enden der beiden Greifschenkel 8, die das Bracket 4 als dazwischen eingeklemmten Widerstand benutzen. Durch den fließenden Gleichstrom wird das Bracket 4 erwärmt und gibt die Wärme dann auch an die Klebstoffschicht 3 ab. Durch die Erwärmung der Klebstoffschicht wird diese in ihrer Haftfähigkeit sehr stark vermindert, so daß das Bracket 4 leicht mit Hilfe des Greifinstrumentes 6 abgehoben werden kann, ohne daß es zur Beschädigung der Oberfläche 1 des Zahnes 2 kommt.

Das Zeitrelais 14 sorgt dafür, daß zwischen zwei Schaltvorgängen eine gewisse Zeit vergehen muß, die so eingestellt ist, daß ein zwar erwärmtes Bracket, allerdings noch nicht entferntes Bracket, bei erneutem Ergreifen und Erwärmen durch die Zange 6 vorher ausreichend Zeit gehabt hatte, sich genügend abzukühlen.

Natürlich ist die beschriebene Vorrichtung zur Durchführung des erfindungsgemäßen Verfahrens noch in vielfacher Hinsicht abzuändern, ohne den Grundgedanken zu verlassen. Die für das Verfahren geeignete Vorrichtung ist nicht auf die spezielle Art der Pinzettenschenkelgestaltung beschränkt, auch nicht auf die angegebenen Strom- und Spannungswerte ebenso nicht auf die Zeitangaben. Je nach Legierungsart der Brackets 4 können hier andere Ströme, Spannungen und Zeiten vorgesehen sein. So kann auch die Gleichstromquelle selbst mit einer entsprechenden Steuerung ausgerüstet sein, die z. B. vom Benutzer einzustellen ist, was allerdings nicht näher dargestellt wurde.

## Patentansprüche

1. Verfahren zur Entfernung von auf dem Zahnschmelz aufgeklebten, einer orthodontischen Behandlung dienenden Brackets oder anderer metallischer Dentalobjekte, wobei die Klebeschicht zwischen dem Bracket bzw. dem Objekt und dem Zahnschmelz durch Erwärmung in ihrer Haftfähigkeit reduziert wird, *dadurch gekennzeichnet, daß* das Bracket oder Dentalobjekt selbt als elektrischer Widerstand benutzt wird, dessen Erwärmung durch eine direkte elektrische Widerstandserwärmung vorgenommen wird.

2. Verfahren nach Anspruch 1, *dadurch gekennzeichnet, daß* die Erwärmung als Kurzzeiterwärmung durchgeführt wird.

3. Verfahren nach Anspruch 1 oder 2, *dadurch gekennzeichnet, daß* die elektrische Widerstandserwärmung durch eine Folge hochfrequenter Wechselstromimpulse vorgenommen wird.

4. Verfahren nach einem der vorangehenden Ansprüche, *dadurch gekennzeichnet, daß* die Widerstandserwärmung durch ein pinzetten- oder zangenähnliches Greifwerkzeug aufgebracht wird.

5. Verfahren nach einem der vorangehenden Ansprüche, *dadurch gekennzeichnet, daß* das Greifwerkzeug mit einer Gleichstromquelle verbindbar ist, wobei von der Gleichstromquelle eine niedrige Spannung mit einer hohen Stromstärke für einen vergleichsweise kurzen Zeitraum aufgebracht wird.

6. Verfahren nach einem der vorangehenden Ansprüche, *dadurch gekennzeichnet, daß* eine Gleich- oder Wechsel-Spannung von etwa 2 Volt und eine Stromstärke von bis zu 1 Kilo-Ampère in einem Zeitraum von einigen Millisekunden eingesetzt wird.

## Claims

1. A method of removing brackets or other metal dental objects which serve for orthodontic treatment and which are glued on the tooth enamel, wherein the adhesiveness of the layer of adhesive between the bracket or object and the tooth enamel is reduced by heating characterised in that the bracket or dental object is itself used as an electrical resistance which is heated by direct electrical resistance heating.

2. A method according to claim 1 characterised in that the heating operation is carried out in the form of a short-term heating operation.

3. A method according to claim 1 or claim 2 characterised in that the electrical resistance heating operation is effected by a series of high-frequency alternating current pulses.

4. A method according to one of the preceding claims characterised in that the resistance heating effect is applied by means of a gripping instrument similar to a pair of tweezers or tongs.

5. A method according to one of the preceding claims characterised in that the gripping instrument can be connected to a direct current souce, wherein the direct current source applies a low voltage with a high current strength for a comparatively short period of time.

6. A method according to one of the preceding claims characterised in that a dc or ac voltage of about 2 volts and a current strength of up to 1 kilo-ampere is used over a period of time of a few milliseconds.

## Revendications

1. Procédé pour retirer des fixations ou autres objets dentaires métalliques collés sur l'émail des dents et servant à un traitement d'orthodontie, par réduction par chauffage de l'adhérence de la couche de colle entre la fixation ou l'objet et l'émail de la dent, caractérisé en ce que la fixation ou l'objet dentaire lui-même est utilisé en tant que résistance électrique dont l'échauffement est provoqué par un chauffage par résistance électrique directe.

2. Procédé selon la revendication 1, caractérisé en ce que le chauffage est réalisé sous forme d'un chauffage de courte durée.

3. Procédé selon la revendication 1 ou 2, caractérisé en ce que le chauffage par résistance électrique est effectué par une succession d'impulsions en courant alternatif haute fréquence.

4. Procédé selon l'une quelconque des revendications précédentes, caractérisé en ce que le chauffage par résistance est appliqué au moyen d'un outil de saisie analogue à une pincette ou à une tenaille.

5. Procédé selon l'une quelconque des revendications précédentes, caractérisé en ce que l'outil de saisie peut être relié à une source de courant continu, une faible tension d'intensité élevée étant appliquée par cette source de courant continu pendant une durée relativement courte.

6. Procédé selon l'une quelconque des revendications précédentes, caractérisé en ce qu'une tension en courant continu ou en courant alternatif d'environ 2 volts et d'une intensité pouvant aller jusqu'à 1 kilo-ampère est utilisée pendant une durée de quelques millisecondes.

EP 0 236 373 B1

Fig. 1

Fig. 2

Fig. 3